Europäisches Patentamt

European Patent Office

Office européen des brevets

(19)

(11) Veröffentlichungsnummer: **0 154 828**

**B2**

(12) **NEUE EUROPÄISCHE PATENTSCHRIFT**

(45) Veröffentlichungstag der neuen Patentschrift:
**14.11.90**

(51) Int. Cl.⁵: **F 16 F 13/00,** B 60 K 5/12

(21) Anmeldenummer: **85101603.0**

(22) Anmeldetag: **14.02.85**

(54) **Hydraulisch gedämpftes elastisches Lager, insbesondere für den Antriebsmotor in Kraftfahrzeugen.**

(30) Priorität: **01.03.84 DE 3407553**

(43) Veröffentlichungstag der Anmeldung:
**18.09.85 Patentblatt 85/38**

(45) Bekanntmachung des Hinweises auf die
Patenterteilung:
**23.12.87 Patenblatt 87/52**

(45) Bekanntmachung des Hinweises auf die
Entscheidung u̇ber den Einspruch:
**14.11.90 Patentblatt 90/46**

(84) Benannte Vertragsstaaten:
**DE FR GB IT SE**

(56) Entgegenhaltungen:
**EP-A-0 027 751       DE-C-3 225 700**
**EP-A-0 038 062       FR-A-2 372 351**
**DE-A-2 906 282       FR-A-2 468 794**
**DE-A-3 246 587       GB-A-2 041 485**
**DE-C-2 718 121       GB-A-2 132 311**
**DE-C-3 040 396       US-A-4 159 091**

(73) Patentinhaber: **Continental Aktiengesellschaft**
**Königsworther Platz 1**
**D-3000 Hannover 1 (DE)**

(72) Erfinder: **Eberhardt, Günter, Dr.**
**Knülweg 1**
**D-3007 Gehrden 1 (DE)**
Erfinder: **Heitzig, Jürgen**
**Geibelstrasse 14**
**D-3000 Hannover 1 (DE)**
Erfinder: **Fischer, Werner**
**Moorkamp 57**
**D-3000 Hannover 1 (DE)**

EP 0 154 828 B2

Courier Press, Leamington Spa, England.

**Beschreibung**

Die Erfindung bezieht sich auf hydraulisch gedämpfte elastische Lager, insbesondere für den Antriebsmotor in Kraftfahrzeugen gemäß Oberbegriff des Anspruchs 1.

Motorlager dieser Art sind beispielsweise in der GB—A—2 041 485 beschrieben und dargestellt. Ähnliche Lager sind ferner aus der US—A—4 159 091 und der DE—C—3 225 700 bekannt.

Hochfrequente, beispielsweise von einem Kraftfahrzeugmotor ausgehende Schwingungen, die auf ein solches Lager einwirken, weisen im allgemeinen so kleine Amplituden auf, daß sie nur zu gerinfügigen Auslenkungen der Membran in der Größenordnung von wenigen Zehntel Millimeteren führen, ohne daß sie die Membran an den deren Freiweg begrenzenden Anschlagflächen zur Anlage bringen. Sobald die Amplituden jedoch so groß werden, daß die Membran bis an ihre Anschalgflächen ausgelenkt und dabei die besagte Ausnehmung in der Trennwand dicht verschlossen wird, steht für den weiteren Druckausgleich zwischen den Lagerkammern nur noch der oben erwähnte ständig offene Überströmkanal zur Verfügung. Dessen freier Querschnitt ist so bemessen, daß das Überströmen von Hydraulikflüssigkeit von einer Kammer in die andere stark gedrosselt wird, und dies hat eine entsprechende Dämpfung der langhubigen Schwingungen zur Folge.

In der Praxis zeigte sich nun, daß bei solchen Lagern im Übergangsbereich zwischen kurz- und langhubigen Schwingungen — also unter bestimmter Frequenz — und Amplitudenbedingungen — eine lästige Geräuschentwicklung auftrat, die insbesondere in Personenkraftwagen als äußerst lästig empfunden wurde, und es stellte sich daher die Aufgabe, die Ursache dieser Klopf- bzw. Klappergeräusche zu beseitigen.

Diese Aufgabe wird gemäß der vorliegenden Erfindung in Lagern der eingangs geschilderten Gattung durch die kennzeichnenden Merkmale des Anspruchs 1 gelöst. Die Einbuchtungen sind zweckmäßig im wesentlichen als Kreisabschnittsflächen, z.B. als Halbkreisflächen gestaltet.

Mit der erfindungsgemäßen Gestaltung der Dämpfungsvorrichtung gelingt es, die bisher als umvermeidlich hingenommenen Geräusche der schwingenden Lager auch in den kristischen Bereichen praktisch vollständig zu unterdrücken. Diese günstige Wirkung ist auf die Änderung des Strömungsflusses im Randbereich der Membran zurückzuführen. Mit der aufgefundenen Lösung stützt sich die Erfindung auf die Erkenntnis von der Bedeutung der Membran-Anlageflächen in der dem Rand der Membran zugeordneten Umfangszone der überdeckten Ausnehmung in der Gehäuse-Trennwand als ursächlich für die Geräuschentstehung. Die daraus gefolgerte Annahme einer durch das wechselweise Verdrängen von Dämpfungsflüssigkeit unter dem Einfluß höherer Schwingungsfrequenzen hervorgerufenen Verhärtung hat sich in der praktischen Ausführung des Erfindungsgedankens als richtig erwiesen.

Zum Verdeutlichen der Erfindung ist ein Ausführungsbeispiel in der Zeichnung schematisch dargestellt. Es zeigen:
Fig. 1 ein Motorlager im Querschnitt;
Fig. 2 eine Einzelheit aus Fig. 1 im Grundriß und
Fig. 3 ein Diagramm mit der vergleichenden Gegenüberstellung zweier Federarten.

Das gezeichnete Lager ist aus einem topfartigen Gehäuse 3 und einem dieses nach oben abdeckenden und mit einem Anschlußteil 4 haftend verbundenen kegelstumpfförmigen Gummi-Federelement 5 aufgebaut.

Das Gehäuse 3 ist in seinem unteren Teil mit mehreren Entlüftungslöchern 13 versehen und wird durch eine dichtend in eine flanschartig umbördelte Randeinfassung eingespannte biegsame Membran 6 nach außen abgeschlossen. Mit Hilfe einer fest in das Gehäuseunterteil eingesetzten Kopfschraube 23 kann das Lager an einem nicht gezeichneten Karosserieteil befestigt werden, während der Anschlußteil 5 zum Anbringen an einer ebenfalls nicht weiter dargestellten Motorhalterung vorgesehen ist und zu diesem Zweck eine Kopfschraube 15 trägt. Eine in die Randeinfassung des Gehäuses 3 eingesetzte Trennwand 7, 10 teilt den Gehäuseinnenraum zwischen dem Federelement 5 und der Membran 6 in eine obere und eine untere Kammer 8 bzw. 9 auf, die beide mit einer Dämpfungsflüssigkeit vollständig angefüllt sind.

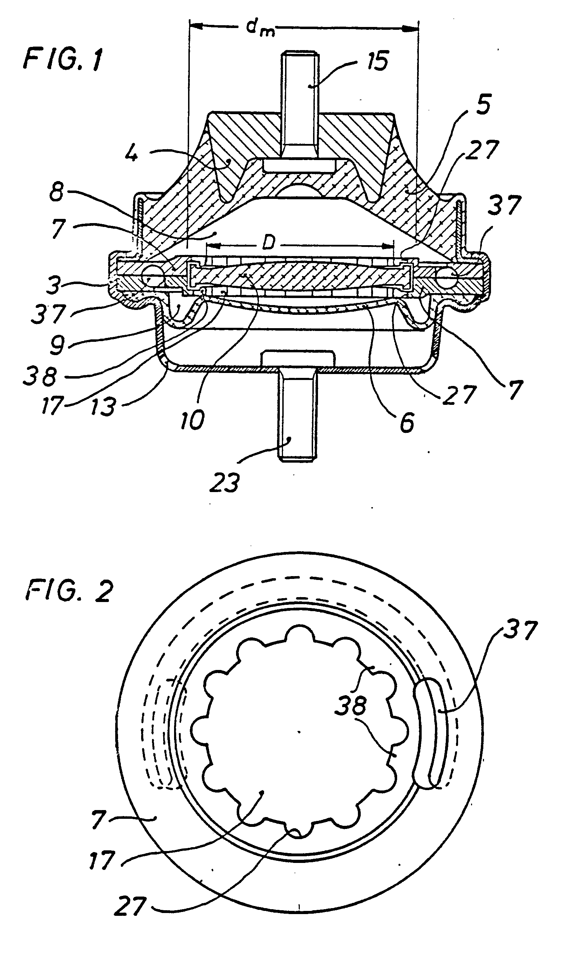

Die Trennwand besteht im wesentlichen aus zwei identischen metallischen Ringelementen 7, die in der gezeichneten Einbaulage eine die konzentrische Ausnehmung 17 überspannende biegsame Membran 10 mit gerinfügigem Axialspiel beweglich an ihrem Randwulst zwischen sich einschließen. Die Halterung der Membran 10 bildet gleichzeitig einem verengten Überströmweg zwischen den beiden Kammern 8 und 9, der mit dem Anschlagen der Membran 10 an eines der Ringelemente 7 der Trennwand unter der Wirkung eines Druckunterschiedes nach Aufbrauchen des verfügbaren Freiweges eine weitere Verengung erfährt. Parallel dazu sind die beiden Kammern (8, 9) durch einen ständig offenen Überströmkanal 37 miteinander verbunden, der in der dargestellten Ausführungsform ringförmig in die beiden Ringelemente 7 der Trennwand eingearbeit ist. Die die Ausnehmung 17 begrenzenden Randflächen der Ringelementen 7 der Trennwand sind gemäß der Draufsichtdarstellung in Fig. 2, einer Innenverzahnung vergleichbar, mit einer Folge von halbkreisförmigen Einbuchtungen 27 gestaltet, so daß die Membran 10 praktisch nur mit den zwischen jeweils benachbarten Einbuchtungen nach innen vorspringenden Randteilen 38 der Ringelemente in Berührung kommt. Wie es die Querschnittsdarstellung in Fig. 1 erkennen läßt, sind die Randteile 38 beiderseits der zusammengesetzten Ringelemente 7 wenigstens teilweise in Richtung gegen die Membran abgebogen.

Der Durchmesser D der Ausnehmung 17 — zwischen den vorspringenden Randteilen 38 gemessen — ist kleiner als der mittlere wirksame Durchmesser dm des Gummi-Federelementes 5.

Für die Funktionstüchigkeit der neuartigen Drosseleinrichtung hat sich als besonders günstig herausgestellt, das Maßverhältnis D/dm möglichst groß, auf jeden Fall aber größer als 0,5 zu wählen.

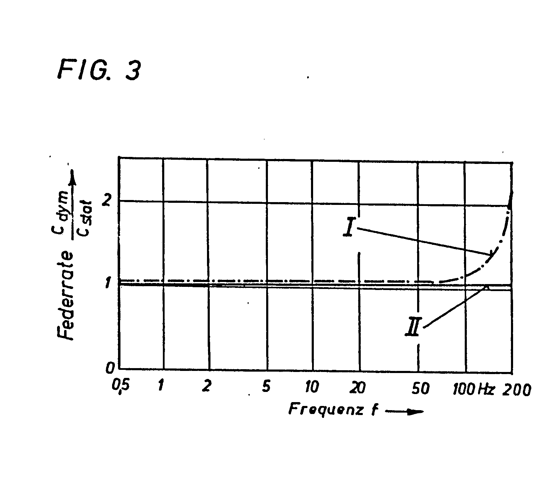

Die Vorteile der Erfindung zeigten sich als Egebnis vergleichender Messungen der relativen Federraten c(dyn)/c(stat) einmal an einem herkömmlichen und zum anderen an einem erfindungsgemäßen Lager. Dem in Fig. 3 dargestellten ermittelten Diagramm lagen Messungen bei einer Amplitude von etwa 0,1 mm über einen Schwingungsbereich von 0.5 bis 200 Hz zugrunde. Die für das herkömmliche Lager geltende Kurve I zeigt einen deutlichen, unerwünschten Anstieg ab 100 Hz, während das erfindungsgemäße Lager (Kurve II) keine dynamische Verhärtung erkennen läßt.

## Patentansprüche

1. Hydraulisch gedämpftes elastisches Lager, insbesondere für den Antriebsmotor in Kraftfahrzeugen, mit einem von gummielastischen Federelementen (5) abgedeckten und durch eine Trennwand (7, 10) in zwei mit einer Dämpfungsflüssigkeit gefüllte wechselweise volumenveränderliche Kammern (8, 9) unterteilten Gehäuse, wobei die Trennwand (7, 10) eine in einer Ausnehmung (17) begrenzt axial frei bewegbare, einen verengten Überströmweg für die Dämpfungsflüssigkeit begrenzende biegsame Membran (10) sowie in ihren starren Ringelementen (7) einen ständig offenen, die beiden Kammern (8, 9) miteinander verbindenden Überströmkanal (37) aufweist, dadurch gekennzeichnet, daß der Innenrand der Ausnehmung (17) in den starren Ringelementen (7) mit in gegenseitigen Winkelabständen über ihren Umfang verteilten, den Randwulst der Membran (10) übergreifende Einbuchtungen (27) ausgebildet ist, und daß die zwischen den Einbuchtungen (27) zahnartig nach innen vorspringenden Randteile (38) der Ausnehmung (17) beiderseits in Richtung gegen die Membran (10) abgebogen sind.

2. Lager nach Anspruch 1, dadurch gekennzeichnet, daß die Einbuchtungen (27) im wesentlichen als Kreisabschnittsflächen, z.B. als Halbkreisflächen gestaltet sind.

3. Lager nach den Ansprüchen 1 und 2, dadurch gekennzeichnet, daß der kleinste Durchmesser (D) der Ausnehmung (17) in einer dem mittleren Durchmesser (dm) der gummi-elastischen Federelemente (5) bis zu mindestens der Hälfte dieses Wertes entsprechenden Größenordnung bemessen ist.

## Revendications

1. Support élastique à amortissement hydraulique, en particulier pour le moteur de propulsion dans des véhicules automoteurs, comportant un corps séparé par une cloison (7, 10) en deux compartiments (8, 9) à volume variable remplis alternativement d'un liquide amortisseur et recouvert d'éléments élastiques en caoutchouc, la cloison (7, 10) comportant une membrane flexible (10) logée dans un évidement (17) avec un mouvement axial libre limité et délimitant un passage d'écoulement rétréci pour le liquide d'amortissement ainsi que dans ses éléments annulaires rigides (7), un canal d'écoulement (37) constamment ouvert reliant ensemble les deux compartiments (8, 9), caractérisé en ce que des dentelures (27) recouvrant le bourrelet périphérique de la membrane (10) et réparties à des distances angulaires mutuelles sur la périphérie de l'évidement (17), sont ménagées dans le bord intérieur de l'évidement (17) dans les éléments annulaires rigides (7) et en ce que les parties périphériques (38) de l'évidement (17) faisant saillie vers l'intérieur en forme de dents entre les dentelures (27) sont repliées de part et d'autre vers la membrane (10).

2. Support selon la revendication 1, caractérisé en ce que les dentelures (27) forment essentiellement des segments de cercle, par exemple des demi-cercles.

3. Support selon les revendications 1 et 2, caractérisé en ce que le plus petit diamètre (D) de l'évidement (17) est dimensionné dans un ordre de grandeur correspondant au diamètre moyen (dm) des éléments élastiques en caoutchouc (5) et allant jusqu'à au moins la moitié de cette valeur.

## Claims

1. Hydraulically damped elastic mounting, in particular for driving engine in motor vehicles, having a housing which is covered by rubber-elastic resilient elements (5) and is divided, by means of a driving wall (7, 10), into two chambers (8, 9) which are filled with a damping fluid and change volumes alternately, the dividing wall (7, 10) having a flexible diaphragm (10), which is axially displaceable to a limited extent in a recess (17) and defines a constricted overflow path for the damping fluid, and, in its rigid annular elements (7), having a permanently open overflow passage (37) which joins the two chambers (8, 9) together, characterised in that the inner edge of the recess (17) in the rigid annular elements (7) is provided with indentations (27) which are distributed over its periphery at mutual angular spacings and overlap the edge bead of the diaphragm (10), and in that the edge portions (38) of the recess (17), which protrude inwardly in a toothlike manner between the indentations (27), are curved at both ends in a direction towards the diaphragm (10).

2. Mounting according to claim 1, characterised in that the indentations (27) are substantially formed as circular segmental areas, e.g. as semicircular areas.

3. Mounting according to claims 1 and 2, characterised in that the minimum diameter (D) of the recess (17) is of an order of magnitude corresponding to the average diameter ($d_m$) of the rubber-elastic resilient elements (5) up to at least half of this value.

FIG. 1

FIG. 2

## FIG. 3